# EUROPEAN PATENT APPLICATION

(11) **EP 4 656 918 A1**
(43) Date of publication of application: **03.12.2025**
(21) Application number: 23918587.9
(22) Date of filing: 12.12.2023
(51) Int. Cl.: F16K 27/06

(54) **VALVE DEVICE**

(30) Priority: 24.01.2023 JP 2023008671
(71) Applicant: Nippon Thermostat Co., Ltd., Kiyose-shi Tokyo 204-0003 (JP)
(72) Inventor: KUMASHIRO Tsuyoshi, Kiyose-shi, Tokyo 204-0003 (JP); SATO Junichi, Kiyose-shi, Tokyo 204-0003 (JP)
(74) Representative: Hoffmann Eitle
(86) International application number: PCT/JP2023/044447
(87) International publication number: WO 2024/157632

(57) **Abstract**

Provided is a valve device capable of reducing pressure loss. A valve device 1 according to the present invention comprises: a housing 11 in which an inflow port 11a and outflow ports 11b for a cooling liquid are formed; a cylindrical valve body 12 that is housed in the housing 11 and that switches the communication state between the inflow port 11a and the outflow ports 11b by rotating inside the housing 11; and a frame 17 that is mounted to the inflow port 11a and that serves as a passage for supplying the cooling liquid to an internal space of the valve body 12. The frame 17 has at least one straightening unit that guides the cooling liquid in a desired direction by bending the inflow direction of the cooling liquid with respect to the rotation shaft of the valve body 12.

## Description

### Technical Field

The present invention relates to a valve device that distributes an inflow coolant into a desired flow passage in a cooling circuit of an automobile.

### Background Art

In the cooling circuit of an automobile (a circulation system of a coolant for an automobile), a valve device has been conventionally used for distributing an inflowing coolant to the respective device sides including a heating heat exchanger, an oil cooler, and a radiator.

In the following patent literature 1(PTL 1), as an example of the valve device used for the cooling circuit of the automobile, a flow rate control valve for distributing a coolant supplied from a cylinder head side under pressure by a water pump to a radiator and the like and controlling the flow rate thereof is disclosed.

Specifically, the flow rate control valve described in PTL 1 includes a valve housing unit, a rotary shaft axially rotatably supported in the valve housing unit, a valve housed in the valve housing unit and attached integrally rotatably attached to the rotary shaft, and an electric motor for rotationally driving the valve (rotary shaft) as main component elements.

Furthermore, three communication ports connected to pipes of the radiator and the like for distributing the coolant are formed to protrude, in the outer periphery of the valve housing unit. Meanwhile, with respect to the valve which rotates axially integrally with the rotating shaft in the valve housing unit, an opening is formed at one end in the axial direction as an inflow port for taking the coolant flowing in from the cylinder head side into an internal space and the other end is closed by an end wall. In addition, a plurality of valve holes individually formed corresponding to the respective communication ports are provided in the outer periphery of the valve, so as to overlap with the respective communication ports without deficiency and excess by axial rotation.

That is, each of the valve holes provided in the valve is formed to switch the communication states between the respective corresponding communication ports and the internal space of the valve with the axial rotation. Accordingly, the coolant taken into the internal space of the valve through the inflow port is appropriately distributed in accordance with the communication states between the communication ports and the internal space of the valve.

### Citation List

### Patent Literature

Patent Literature (PTL 1) JP-A-2015-59615

### Summary of Invention

### Technical Problems

As described above, in the conventional valve device (the flow rate control valve described in PTL 1), the coolant taken into the internal space of the valve is distributed according to the communication states between the communication ports and the internal space of the valve.

However, the coolant flowing into the valve device from the cylinder head side flows in a straight line from one end of the valve into the internal space. The inflow coolant collides with the end wall at the other end side of the valve as it is and is distributed to the respective communication port sides formed in the outer periphery of the valve housing unit (the pipes side of the radiator and the like) while forming a turbulent flow in the internal space of the valve. That is, in the conventional valve device, there is a problem that a pressure loss occurs due to the turbulent flow in the internal space of the valve and the flow rate of the coolant downstream becomes lower.

The invention has been made in view of the problem described above and aims to provide a valve device that can reduce pressure loss.

### Solution to Problems

A valve device according to the invention includes a housing in which an inflow and outflow ports for a coolant are formed, a tubular valve housed in the housing that switches communication states between the inflow port and the outflow ports by rotating about a shaft in the housing, and a frame attached to the inflow port, wherein the coolant passes through the frame and flows into an internal space of the valve, and the frame has one or more rectifiers which guide a direction of a flow of the coolant flowing in from the inflow port to a direction in which the flow is bent with respect to the shaft.

According to the above configuration, a lateral flow of the coolant is formed by the rectifier in the internal space of the valve. Accordingly, when the coolant flowing into the internal space from one end of the valve flows out laterally from the valve hole of the valve, the formation of a turbulent flow in the internal space of the valve can be suppressed.

Further, the frame may include an annular frame portion attached to the inflow port and a cylindrical portion formed at a center of the frame portion, wherein one end of the rectifier may be connected to the frame portion and the other end may be connected to the cylindrical portion. In the configuration where the rectifier is placed in this way, the rectifier can reinforce the frame by connecting the frame portion and the cylindrical portion. That is, the rectifier can be provided with two functions, rectification and reinforcement.

A valve device according to the present invention includes a housing in which an inflow port and outflow ports for a coolant are formed, and a tubular valve housed in the housing that switches communication states between the inflow port and the outflow ports by rotating about a shaft in the housing, wherein an introduction port for introducing the coolant into an internal space of the valve at one end of the valve in the direction along the shaft is formed, and one or more rectifiers which guide the direction of a flow of the coolant flowing in from the inflow port to the direction in which the flow is bent with respect to the shaft are provided in the introduction port.

According to the above configuration, a lateral flow of the coolant is formed by the rectifier in the internal space of the valve. Accordingly, when the coolant flowing into the internal space from one end of the valve flows out laterally from the valve hole of the valve, the formation of a turbulent flow in the internal space of the valve can be suppressed.

The rectifier may be provided to be inclined with respect to the shaft. With this configuration, a lateral flow of the coolant can be formed in the internal space of the valve by the rectifier.

Furthermore, a plurality of the rectifiers may be provided, and all of the plurality of the rectifiers may be inclined in the same direction. With this configuration, a swirling flow can be formed in the internal space of the valve by the rectifiers, and thus a lateral flow of the coolant can be reliably formed and the pressure loss can be more reliably reduced.

Furthermore, the coolant may be directed by the rectifier to the outflow port while forming a swirling flow inside the internal space of the valve. According to the configuration, a lateral flow of the coolant can be reliably formed and the pressure loss can be reduced more reliably.

### Advantageous Effects of Invention

According to the valve device of the invention, pressure loss can be reduced.

### Brief Description of Drawings

[Figure 1] FIG. 1 is a cross-sectional view of a valve device according to a first embodiment of the invention.
[Figuer 2] FIG. 2 is a view showing a frame of the valve device in FIG. 1, (a) is a front view showing the appearance of the frame and (b) is a cross-sectional view of the frame shown in (a) cut along line A'-A.
[Figure 3] FIG. 3 is an explanatory diagram schematically showing the flow of a coolant within the valve device in FIG. 1.
[figure 4] FIG. 4 is a cross-sectional view of a valve device according to a second embodiment of the invention.
[Figure 5] FIG. 5 is an explanatory diagram schematically showing a flow of the coolant within the valve device in FIG. 4.
[Figure 6] FIG. 6 is a perspective view showing a valve of a valve device according to a third embodiment of the invention.

### Description of Embodiments

As described below, embodiments of a valve device according to the present invention will be described in detail with reference to the drawings. Note that the invention is not limited by the embodiments. Furthermore, in the specification and the drawings of the application, the elements that can be described in the same manner may have the same signs and the overlapping description thereof may be omitted.

### <First Embodiment>

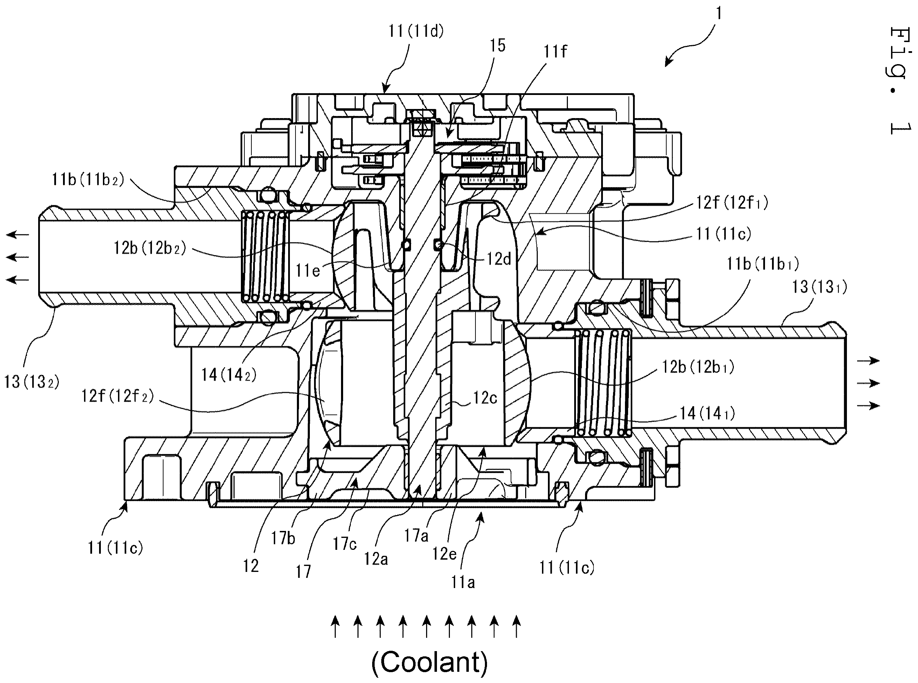

FIG. 1 is a cross-sectional view showing a valve device of a first embodiment of the present invention. In the present embodiment, for convenience of description, upward and downward in FIG. 1 are simply referred to as "upper" and "lower".

A valve device 1 of the present embodiment is used in a cooling circuit (a circulation system of a coolant) of an automobile including a cooling passage through which a coolant flowing out from an engine (cylinder head side) returns to the engine (cylinder block side) via a radiator, and a bypass passage in which the coolant flowing out from the engine returns to the engine not via (detouring) the radiator. The valve device 1 distributes the coolant flowing in passing through the engine to the cooling passage and the bypass passage, respectively, by controlling the valve holes formed in the valve to open or close, and also controls the flow rate.

### <Basic Structure of Valve Device>

The valve device 1 of the present embodiment includes a housing 11 in which an inflow port 11a and a plurality of outflow ports 11b (11b₁, 11b₂) for the coolant are formed, a valve 12 housed in the internal space of the housing 11 and being rotatable about a shaft (rotary shaft) in the internal space, adaptors 13 (13₁, 13₂) connected to the outflow ports 11b, and seal members 14 (14₁, 14₂) for blocking the leakage of the coolant passing through valve holes 12f (12f₁, 12f₂) formed in the valve 12 and distributed toward the adaptors 13. The valve device 1 appropriately distributes the coolant to the cooling passage and the bypass passage by controlling the rotation of the valve 12 according to an instruction from a control device (not shown) mounted on a vehicle.

The structure of the valve device 1 of the present embodiment will be described below more specifically. In the present embodiment, the direction along an axial line as the center of rotation of the valve 12 is referred to as the "axial direction", a direction orthogonal to the axial line is referred to as the "radial direction", and a direction around the axial line is referred to as the "circumferential direction".

The housing 11 includes a body 11c having an internal space for housing the valve 12, and a lid 11d having a a bottomed shape forming a space for housing a reduction gear 15 between an upper surface of the body 11c and the body 11c itself. The opening end portion (peripheral edge) of the lid 11d is attached to the upper surface of the body 11c to close the internal space of the lid 11d. Furthermore, the reduction gear 15 housed in the space of the lid 11d includes a plurality of gears and has the function of reducing and transmitting to the valve 12 the rotation of a motor (not shown) that operates in accordance with a command from the control device.

In the housing 11, a cylindrical insertion cylinder 11e that rotatably supports a shaft 12a that functions as a rotary shaft of the valve 12 in an inserted state is provided in an upper portion of the body 11c. A journal bearing 11f rotatably supporting the upper portion of the shaft 12a is provided on the inner circumference of the insertion cylinder 11e.

In the housing 11, the outflow ports 11b (11b₁, 11b₂) having substantially cylindrical shapes protrude outwardly in the radial direction in the outer circumference of the body 11c. The outflow ports 11b₁, 11b₂ shown in FIG. 1 are provided at different positions in the axial direction and the circumferential direction, respectively. In addition, adaptors 13 (13₁, 13₂) having cylindrical shapes communicating with the cooling passage and bypass passage described above are inserted and fixed in the outflow ports 11b, respectively.

In FIG. 1 (a cross-sectional view), the outflow ports 11b are provided in two positions of the body 11c, however, not limited to those. The outflow ports 11b may be further formed at other positions than those in FIG. 1 according to the number and directions of flow passages for distributing the coolant.

Furthermore, the inflow port 11a communicating with the cylinder head side for taking the coolant into the valve 12 side is formed on the lower end of the housing 11. Furthermore, a frame 17 supporting the lower end of the shaft 12a by a cylindrical portion 17a formed in the central portion is attached to the inflow port 11a. Specifically, the frame 17 has an annular frame portion 17b attached to the housing 11 along the peripheral edge of the inflow port 11a, the cylindrical portion 17a formed in the central portion of the frame portion 17b, and three bridges 17c for frame reinforcement respectively connecting three parts (at equal intervals) of the frame portion 17b and the cylindrical portion 17a. The coolant can pass through the frame 17 and flow into the housing 11. The details of the frame 17 of the present embodiment will be described later.

The valve 12 has the shaft 12a which functions as the rotary shaft and a valve body 12b having an outer wall that can switch the communication state with the outside and integrally rotatably connected to the shaft 12a. The gears as component members of the reduction gear 15 are integrally attached to the shaft 12a. Accordingly, when the gears rotate by being driven by the motor, the valve 12 (shaft 12a, valve body 12b) rotates integrally in conjunction with the rotation.

Further, in the valve 12, a connecting part 12c which is connected to the outer circumferential portion of the shaft 12a with the shaft 12a penetrating in the central portion is provided in the valve body 12b. In the valve body 12b, two valve portions in tubular shapes each having upper and lower openings and a spherical outer wall are vertically interlocked. In the present embodiment, one valve portion formed in the lower part is defined as a first valve portion 12b₁ and the other valve portion formed thereabove is a second valve portion 12b₂.

The part between the shaft 12a and the insertion cylinder 11e of the housing 11 is closed by a seal ring 12d. Accordingly, the coolant within the body 11c does not flow from the insertion cylinder 11e into the lid 11d. Further, the lower end opening of the first valve portion 12b₁ functions as an introduction port 12e that takes the coolant flowing in from the cylinder head side via the frame 17 (inflow port 11a) into the internal space of the valve 12.

The first valve portion 12b₁ and the second valve portion 12b₂ are provided with the valve hole 12f₁ and the valve hole 12f₂, respectively. The valve holes 12f penetrate the thick parts of the first valve portion 12b₁ and the second valve portion 12b₂ in the radial direction. When the valve 12 rotates and the valve hole 12f overlaps with the opening of the seal member 14, the coolant flows out from the overlapped portion. In this manner, when the valve body 12b rotates with the rotation of the shaft 12a, the respective valve holes 12f open and close and switch the communication states between the inflow port 11a and the outflow ports 11b (11b₁, 11b₂) by the opening and closing actions. That is, the respective valve holes 12f provided in the valve 12 are formed to switch the communication states between the respective corresponding outflow ports 11b (11b₁, 11b₂) and the internal space of the valve 12 with the rotation. Accordingly, the coolant taken into the internal space of the valve 12 (first valve portion 12b₁, second valve portion 12b₂) via the introduction port 12e is distributed toward the cooling passage and the bypass passage in accordance with the opening and closing actions of the respective valve holes 12f and the flow rates thereof are controlled.

In the present embodiment, as an example, the valve device 1 that distributes the coolant flowing in from the inflow port 11a (via the frame 17) toward the cooling passage and the bypass passage is described. However, the connection configuration of the flow passages communicating with the valve device 1 is not limited to that but can be appropriately changed according to the specifications of the cooling circuit (the circulation system of the coolant) of the automobile.

Further, in the present embodiment, the seal members 14 (14₁, 14₂) are pressed against the outer wall of the valve 12 by biasing forces of coil springs as shown in FIG. 1, however, not limited to those. As long as the seal members can block the leakage of the coolant passing through the valve holes 12f of the valve 12 and distributed toward the adaptors 13, the seal members may be implemented by other structures.

### <Frame>

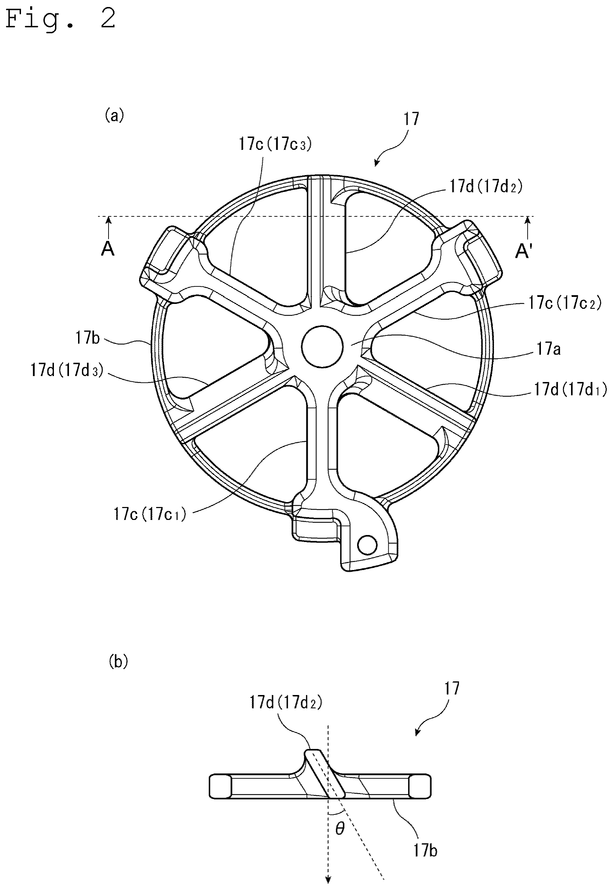

Subsequently, the frame 17 will be described in detail. FIG. 2 shows the frame 17 of the valve device 1 in FIG. 1, (a) is a front view showing the appearance of the frame 17 and (b) is a sectional view of the frame 17 cut along line A'-A shown in (a).

In FIG. 2, as described above, the frame 17 has the annular frame portion 17b attached to the inner wall of the inflow port 11a formed in the lower end of the valve device 1 (body 11c), the cylindrical portion 17a formed at the center of the frame portion 17b and supporting the lower end of the shaft 12a that functions as the rotary shaft of the valve 12, and the three bridges 17c (17c₁, 17c₂, 17c₃) for frame reinforcement respectively connecting the three places (at equal intervals) of the frame portion 17b and the cylindrical portion 17a. Accordingly, this allows the frame to achieve the desired strength. The coolant can pass through the frame 17 and flow into the housing 11. Note that the positions at which one end of the bridges 17c and the frame portion 17b are joined are not limited to the three (equidistant) positions shown in Figure 2, but may be two equidistant positions, four or more equidistant positions, or even non-equidistant positions, provided that the required strength is achieved.

Further, the frame 17 includes a plurality of rectifiers 17d (17d₁, 17d₂, 17d₃) provided in the flow passages of the coolant formed between the bridges 17c and guiding the coolant passing through the flow passages in desired directions. Specifically, one end of each rectifier 17d is connected to the frame portion 17b and the other end is connected to the cylindrical portion 17a. Each rectifier 17d has an elongated nearly flat plate shape and is inclined at a predetermined angle θ with respect to the rotary shaft of the valve 12. By the inclination, the flow of the coolant passing through the frame 17 and flowing into the internal space of the valve 12 is guided in an inclination direction of the rectifier 17d. That is, the rectifier 17d functions as a guide for guiding the flow in a desired direction. In the present embodiment, the inclination angle θ of the rectifier 17d is about 45 degrees, but the inclination angle θ can be optionally set. Further, the shape of the rectifier 17d is not limited to the flat plate shape. For example, the rectifier 17d may have a triangular prism shape and an inclination surface inclined at the predetermined angle θ with respect to the rotary shaft of the valve 12. Furthermore, the rectifier 17d may have a through hole or slit bending or inclined with respect to the rotary shaft of the valve 12.

In the present embodiment, the coolant passing through the frame 17 and flowing in forms a swirling flow bending with respect to the rotary shaft of the valve 12 by the rectifiers 17d and turning around the rotary shaft of the valve 12 in the internal space of the valve 12 and moves toward the respective outflow ports 11b₁, 11b₂.

Accordingly, the formation of a turbulent flow in the internal space of the valve 12 is suppressed and the coolant smoothly moves toward the respective outflow ports, thereby reducing a pressure loss, and thus lowering of the downstream flow rate of the coolant can be suppressed. That is, the valve device 1 can efficiently distribute the coolant into the cooling passage and the bypass passage.

Both the bridges 17c and the rectifiers 17d are provided, and thus the strength of the frame 17 can be further increased. As long as the strength of the frame 17 can be secured only by the rectifiers 17d, the bridge 17c may be omitted.

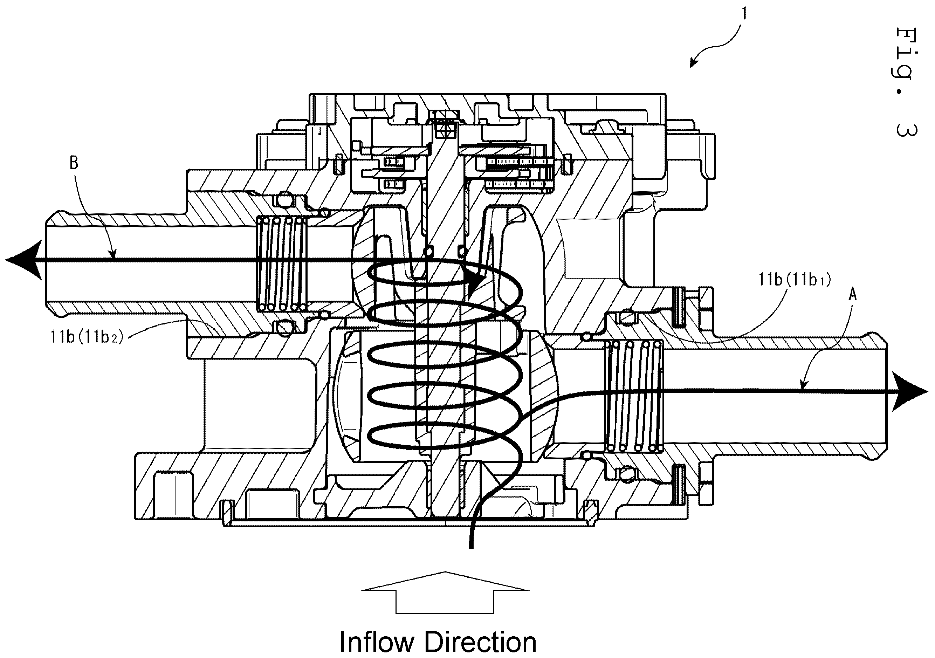

FIG. 3 is an explanatory diagram schematically showing the flow of the coolant within the valve device 1 in FIG. 1. In the present embodiment, the coolant flowing out from the cylinder head enters the inflow port 11a from an inflow direction in FIG. 3. Then, the coolant is guided by the rectifiers 17d provided in the inflow port 11a and flows to bend with respect to the rotational axis of the valve 12. Accordingly, the lateral flow of the coolant is formed in the internal space of the valve 12. The valve holes 12f penetrate in the radial direction (lateral direction) of the valve 12, and the coolant smoothly flows from the inflow port 11a toward the respective outflow ports 11b₁, 11b₂ and the formation of a turbulent flow in the internal space of the valve 12 is suppressed. The coolant passing through the respective outflow ports 11b₁, 11b₂ is supplied to the cooling passage or the bypass passage (see arrows A, B in FIG. 3).

Further, in the present embodiment, the inclination angles θ of the respective rectifiers 17d are the same. Since the inclination directions of the plurality of rectifiers 17d are the same, the swirling flow can be formed in the internal space of the valve 12. Accordingly, the lateral flow of the coolant can be easily formed in the internal space of the valve 12 and the pressure loss can be reliably reduced. The inclination angle θ may be changed with respect to each rectifier 17d, and the inclination directions of the respective rectifiers 17d may be different. Further, the number of the rectifiers 17d is not limited to three as shown in FIG. 2, but at least one rectifier 17d may be provided.

In the present embodiment, the one ends of the respective rectifiers 17d are connected to the frame portion 17b and the other ends are connected to the cylindrical portion 17a. Since the rectifiers 17d are radially arranged in the frame 17, the lateral flow of the coolant is easily formed in the internal space of the valve 12. Both ends of each rectifier 17d may be connected to the frame portion. As described above, the shapes, the inclinations, the number, and the arrangement of the rectifiers 17d can be appropriately changed to guide the coolant in the desired direction.

### <Second Embodiment>

The frame 17 described above can be applied to a valve device having a fail-safe function in a manner similar to the valve device 1. As described below, the elements that can be explained in the same manner as those of the valve device 1 described above in FIG. 1 have the same signs, and the overlapping explanation thereof is omitted.

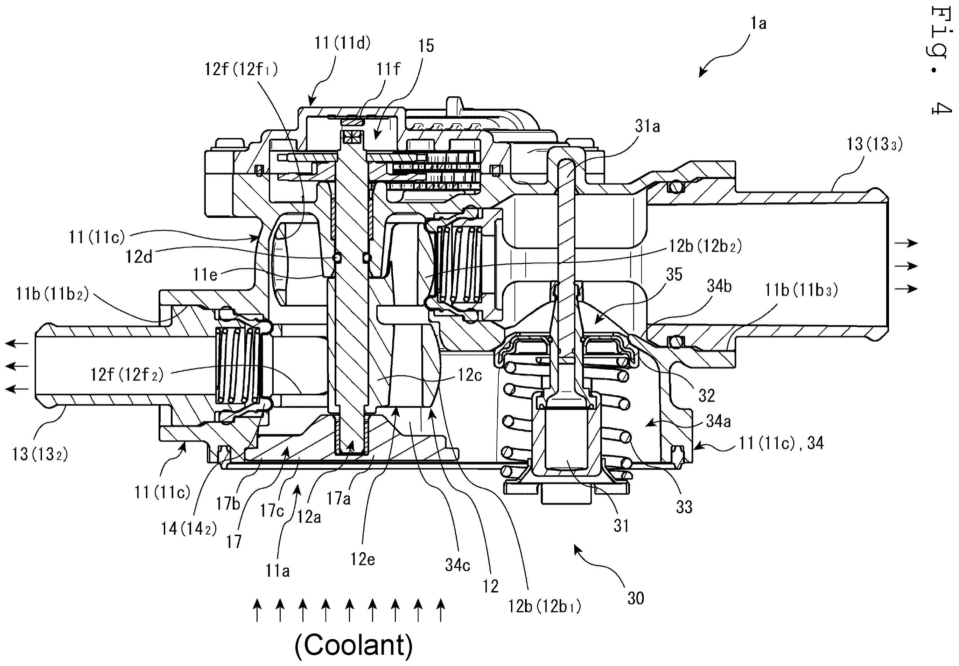

FIG. 4 is a cross-sectional view showing a valve device of a second embodiment. In a valve device 1a shown in FIG. 4, an outflow port 11b₃ (11b) having a substantially cylindrical shape is formed protruding outward in the radial direction in the outer periphery of the body 11c. Further, a cylindrical adaptor 13₃ (13) communicating with the cooling passage is inserted and fixed in the outflow port 11b₃.

The valve device 1a shown in FIG. 4 is provided with a fail-safe unit 30 that enables the communication between the inflow port 11a and the outflow port 11b₃ in a case where the valve 12 is not driven due to a failure or the like, a case where the coolant reaches a predetermined temperature or the like. The fail-safe unit 30 is for securing the supply passage of the coolant even when the valve 12 does not normally operate due to a failure or the like.

The fail-safe unit 30 includes a thermo-element 31, a valve plate member 32, and a coil spring 33, and operates on the same principle as a thermostat of wax-pellet type or the like.

In the internal space of the body 11c of the housing 11, an element housing 34 housing the thermo-element 31 of the fail-safe unit 30 is formed. Further, a flow passage 35 connected to the outflow port 11b₃ is formed above the element housing 34 which is closed by the valve plate member 32 of the fail-safe unit 30.

The element housing 34 has a large-diameter space 34a below the valve plate member 32, and further, a reduced-diameter portion 34b having a gradually reduced diameter is formed in the upper end portion of the element housing 34. Furthermore, the large-diameter space 34a communicates with the inflow port 11a through a valve communication portion 34c.

In the fail-safe unit 30, the valve plate member 32 is disposed to be pressed toward the reduced-diameter portion 34b by being biased toward the reduced-diameter portion 34b side by the coil spring 33. Accordingly, the passing of the coolant from the large-diameter space 34a side to the flow passage 35 side is blocked.

The thermo-element 31 is filled with wax inside. When the temperature of the coolant inside the element housing 34 exceeds a predetermined temperature, the wax expands and a rod 31a provided along the axial center of the thermo-element 31 protrudes. When the rod 31a protrudes, the valve plate member 32 integrally attached to the rod 31a moves downward against the biasing force of the coil spring 33, and the coolant within the large-diameter space 34a can freely pass to the flow passage 35 side. Here, the predetermined temperature described above is set in advance to a preferred temperature for communication between the inflow port 11a and the outflow port 11b₃ via the fail-safe unit 30.

Further, in the present embodiment, the coolant passing through the frame 17 and flowing in forms a whirling flow (swirling flow) by the plurality of rectifiers 17d (17d₁, 17d₂, 17d₃) shown in FIG. 2, and part thereof is guided to the element housing 34 side (large-diameter space 34a).

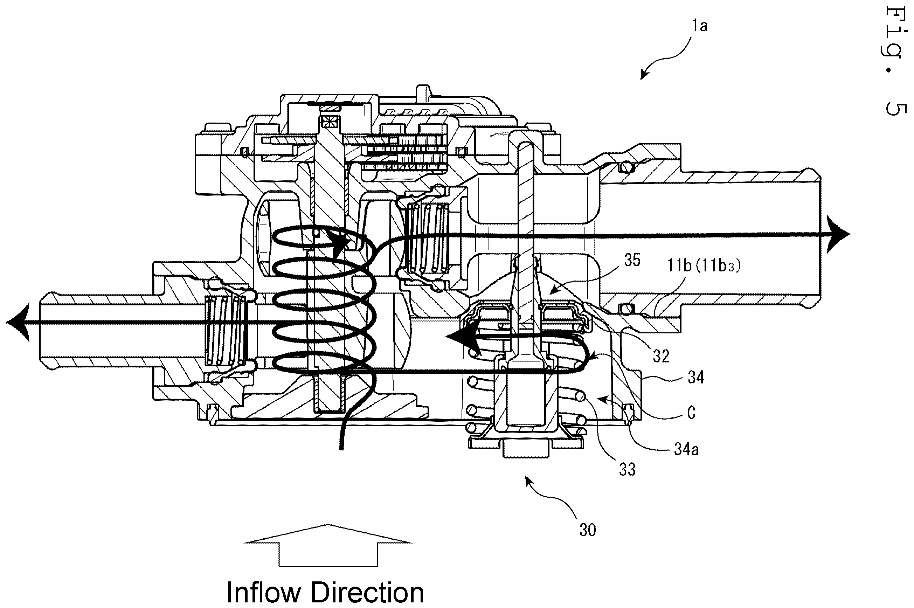

FIG. 5 is an explanatory diagram schematically showing the flow of the coolant within the valve device 1a in FIG. 4. In the present embodiment, the coolant flowing out from the cylinder head enters the inflow port 11a from an inflow direction in FIG. 5. Then, the coolant is guided by the rectifiers 17d provided in the inflow port 11a and flows to bend with respect to the rotational axis of the valve 12. Accordingly, the lateral flow of the coolant is formed in the internal space of the valve 12. The element housing 34 is located at the lateral side of the valve 12, and thus the coolant flows smoothly from the inflow port 11a toward the element housing 34.

That is, according to the valve device 1a shown in FIGS. 4 and 5, the coolant flowing from the inflow port 11a into the body 11c of the housing 11 flows smoothly to the element housing 34 side by the rectifiers 17d, thereby increasing the temperature sensing performance in the fail-safe unit 30. The other component elements other than those related to the fail-safe unit 30 have the same signs and the overlapping explanation will be omitted.

### <Third Embodiment>

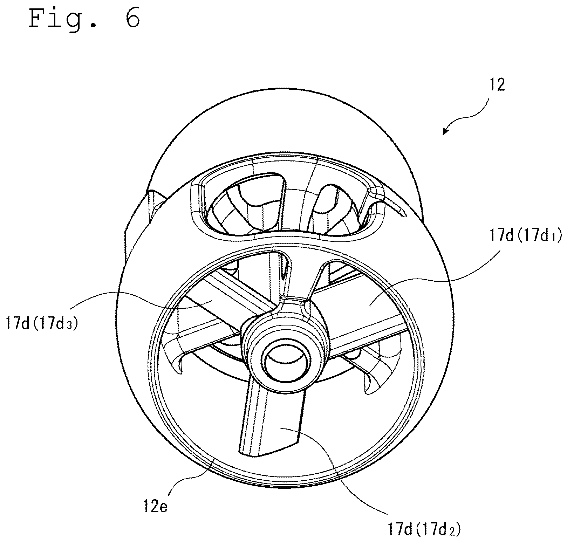

As shown in FIG. 6, the rectifiers 17d described above may be provided in an introduction port 12e of the valve 12. As shown below, the elements that can be explained in the same manner as those of the valve device 1 described above in FIG. 1 have the same signs, and the overlapping explanation thereof is omitted.

A valve device (not shown) of the present embodiment includes a housing 11 in which an inflow port 11a and outflow ports 11b (11b₁, 11b₂) for the coolant are formed and a tubular valve 12 housed in the housing 11 which switches communication states between the inflow port 11a and the outflow ports 11b by rotating around a shaft (rotary shaft) within the housing 11. At one end in the direction along the rotary shaft of the valve 12, the introduction port 12e for introducing the coolant into the internal space of the valve 12 is formed. In the introduction port 12e, rectifiers 17d (17d₁, 17d₂, 17d₃) are provided which guide a direction of a flow of the coolant flowing in from the inflow port 11a to a direction in which the flow is bent with respect to the rotary shaft.

Also in the present embodiment, the rectifiers 17d are provided to be inclined with respect to the rotary shaft. Further, the plurality of rectifiers 17d are provided and all of the plurality of rectifiers 17d are inclined in the same direction. The effect of this is as described above, and the shapes, the inclinations, the number, and the arrangement of the rectifiers 17d can be appropriately changed to guide the coolant in the desired direction. Obviously, the valve 12 with the rectifiers 17d may be used for the valve device 1a including the fail-safe unit 30 as in the second embodiment.

### Reference Signs List

1, 1a valve device
11 housing
11a inflow port
11b, 11b₁, 11b₂, 11b₃ outflow port
11c body
11d lid
11e insertion cylinder
11f journal bearing
12 valve
12a shaft
12b valve body
12b₁ first valve portion
12b₂ second valve portion
12c connecting part
12d seal ring
12e introduction port
12f, 12f₁, 12f₂ valve hole
13, 13₁, 13₂, 13₃ adaptor
14, 14₁, 14₂ seal member
15 reduction gear
17 frame
17a cylindrical portion
17b frame portion
17c bridge
17d, 17d₁, 17d₂, 17d₃ rectifier
30 fail-safe unit
31 thermo-element
31a rod
32 valve plate member
33 coil spring
34 element housing
34a large-diameter space
34b reduced-diameter portion
34c valve communication portion
35 flow passage

## Claims

1. A valve device comprising:
a housing in which an inflow port and outflow ports for a coolant are formed;
a tubular valve housed in the housing that switches communication states between the inflow port and the outflow ports by rotating about a shaft in the housing; and
a frame attached to the inflow port,
wherein
the coolant passes through the frame and flows into an internal space of the valve, and
the frame has one or more rectifiers that guide a direction of a flow of the coolant flowing in from the inflow port to a bending direction with respect to the shaft.

2. The valve device according to claim 1, wherein
the frame includes
an annular frame portion attached to the inflow port; and
a cylindrical portion formed at a center of the frame portion,
wherein
one end of the rectifier is connected to the frame portion and the other end is connected to the cylindrical portion.

3. A valve device comprising:
a housing in which an inflow port and outflow ports for a coolant are formed; and
a tubular valve housed in the housing that switches communication states between the inflow port and the outflow ports by rotating about a shaft in the housing, wherein
an introduction port for introducing the coolant into an internal space of the valve is formed at one end of the valve in a direction along the shaft, and
one or more rectifiers that guide a direction of a flow of the coolant flowing in from the inflow port to a bending direction with respect to the shaft are provided in the introduction port.

4. The valve device according to any one of claims 1 to 3, wherein
the rectifier is provided to be inclined with respect to the shaft.

5. The valve device according to claim 4, wherein
a plurality of the rectifiers are provided, and all of the plurality of the rectifiers are inclined in a same direction.

6. The valve device according to claim 1 or claim 3, wherein
the coolant is directed to the outflow port by the rectifier while forming a swirling flow inside the internal space of the valve.
